# EUROPEAN PATENT APPLICATION

(11) **EP 4 668 490 A1**
(43) Date of publication of application: **24.12.2025**
(21) Application number: 25176681.2
(22) Date of filing: 15.05.2025
(51) Int. Cl.: H01R 4/02, B23K 20/10, H01R 43/02

(54) **ULTRASONIC BONDING DEVICE AND TERMINAL-FITTED ELECTRIC WIRE**

(30) Priority: 18.06.2024 JP 2024097853
(71) Applicant: Yazaki Corporation, Tokyo 108-0075 (JP)
(72) Inventor: Fukui, Masayuki, Makinohara-shi, Shizuoka, 421-0407 (JP)
(74) Representative: Grünecker Patent- und Rechtsanwälte PartG mbB

(57) **Abstract**

An ultrasonic bonding device (100) includes an anvil (120) and a horn. The application surface (111) has an application surface main body part (112), and an application surface end inclined part (113) located at an end part of a side toward which an electric wire (10) extends, and that is formed in a concave curved surface that separates from the mounting surface (121) along an up-and-down direction (Z) toward an end (110a). The mounting surface (121) has a mounting surface main body part (122), and a mounting surface end inclined part (123) located at an end part of a side toward which the electric wire (10) extends and that faces the application surface end inclined part (113) along the up-and-down direction (Z), and that is formed in a convex curved surface that approaches the application surface (111) side along the up-and-down direction (Z) toward an end (120a).

## Description

### BACKGROUND OF THE INVENTION

### 1. Field of the Invention

The present invention relates to an ultrasonic bonding device and a terminal-fitted electric wire.

### 2. Description of the Related Art

For example, JP 2017 - 188 373 A discloses a terminal-fitted electric wire that includes a covered electric wire and a terminal connected to a terminal end part at a tip end of the covered electric wire.

Incidentally, in the terminal-fitted electric wire described in JP 2017 - 188 373 A described above, a core line may be damaged if a square-shaped end part of a horn comes into contact with the core line, when a conductor part of the electric wire is ultrasonically bonded to the terminal. In this case, there is a possibility that a proper conduction region cannot be secured between the electric wire and the terminal. Therefore, there is room for further improvement in the conduction performance at the bonding region between the electric wire and the terminal.

### SUMMARY OF THE INVENTION

The present invention has been made in view of the above circumstances, and an object of the present invention is to provide an ultrasonic bonding device and a terminal-fitted electric wire that can secure proper conduction performance at a bonding region between the electric wire and the terminal.

In order to achieve the above mentioned object, an ultrasonic bonding device according to one aspect of the present invention includes an anvil that has a mounting surface on which a terminal having conductivity and a terminal end of a conductor part of an electric wire having conductivity are mounted; and a horn disposed facing the anvil along an up-and-down direction, and that has an application surface for applying ultrasonic vibration to the terminal disposed on the mounting surface and the conductor part disposed on the terminal, wherein the application surface has an application surface main body part that extends along an axial direction intersecting the up-and-down direction, and an application surface end inclined part located at an end part of a side toward which the electric wire extends in the axial direction, and that is formed in a concave curved surface that separates from the mounting surface along the up-and-down direction toward an end in the axial direction, and the mounting surface has a mounting surface main body part that extends along the axial direction and that faces the application surface main body part along the up-and-down direction, and a mounting surface end inclined part located at an end part of a side toward which the electric wire extends in the axial direction and that faces the application surface end inclined part along the up-and-down direction, and that is formed in a convex curved surface that approaches the application surface side along the up-and-down direction toward an end in the axial direction.

In order to achieve the above mentioned object, a terminal-fitted electric wire according to another aspect of the present invention includes an electric wire that includes a conductor part formed of a plurality of strands having conductivity; and a terminal that includes an electric connection part electrically connected to an object to be connected, and an electric wire connection part to which the conductor part is ultrasonically bonded, wherein the electric wire connection part has a first straight region that extends from the electric connection part, and a curved region that extends from the first straight region to a side opposite to the electric connection part, and that rises from the first straight region to the conductor part side.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a diagram schematically illustrating a terminal-fitted electric wire according to a present embodiment;
FIG. 2 is a diagram schematically illustrating an ultrasonic bonding device according to the present embodiment, and a terminal and an electric wire processed by the ultrasonic bonding device;
FIG. 3 is a diagram schematically illustrating the terminal and the electric wire processed by the ultrasonic bonding device according to the present embodiment; and
FIG. 4 is a diagram schematically illustrating the ultrasonic bonding device in which an inclined part (application surface end inclined part) is provided only on a horn side.

### DETAILED DESCRIPTION OF THE PREFERRED EMBODIMENTS

Hereinafter, an embodiment according to the present invention will be described in detail with reference to the drawings. However, the invention is not limited to this embodiment. Moreover, the components in the following embodiment include those that can be easily replaced by those skilled in the art, or those that are substantially the same.

### Embodiment

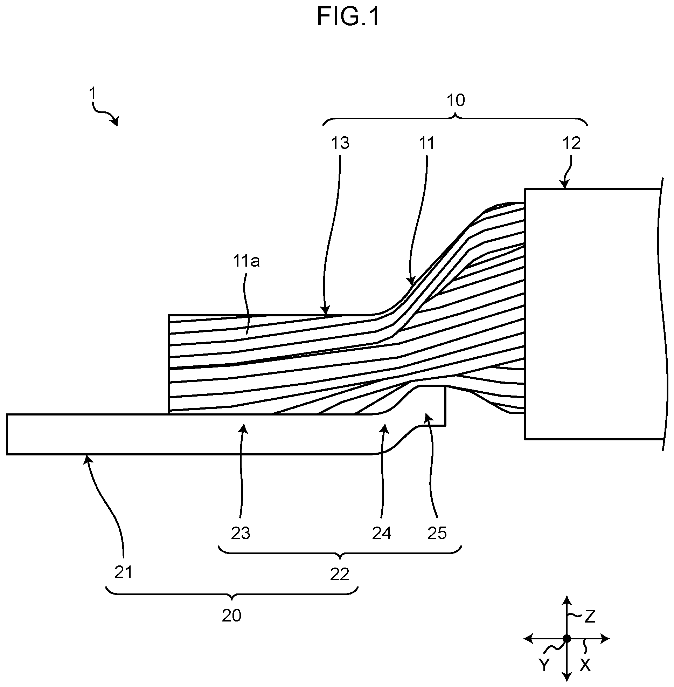

First, a terminal-fitted electric wire 1 in the present embodiment will be described with reference to FIG. 1. In the following description, of a first direction, a second direction, and a third direction intersecting with each other, the first direction is referred to as "axial direction X", the second direction is referred to as "left-and-right direction Y", and the third direction is referred to as "up-and-down direction Z". In this example, the axial direction X, the left-and-right direction Y, and the up-and-down direction Z are orthogonal to each other. Moreover, the axial direction X typically corresponds to an extending direction of the terminal-fitted electric wire 1, a front-back direction of an ultrasonic bonding device 100 that manufactures the terminal-fitted electric wire 1, and the like. Furthermore, the left-and-right direction Y typically corresponds to a width direction of a terminal 20 of the terminal-fitted electric wire 1, a width direction of the ultrasonic bonding device 100 that manufactures the terminal-fitted electric wire 1, and the like. Still furthermore, the up-and-down direction Z corresponds to a vertical direction, and typically corresponds to a thickness direction of the terminal 20 of the terminal-fitted electric wire 1, a height direction of the ultrasonic bonding device 100 that manufactures the terminal-fitted electric wire 1, and the like. Still furthermore, the upside in the vertical direction is referred to as upper part or upper side, and the downside in the vertical direction is referred to as lower part or lower side.

For example, the terminal-fitted electric wire 1 is applied to a wire harness used for a vehicle and the like. In this example, for example, the wire harness is a collective component used to connect devices mounted on a vehicle, and is obtained by bundling a plurality of electric wires W used for supplying power or signal communication. The wire harness connects a plurality of electric wires 10 to the devices by a connector or the like. As illustrated in FIG. 1, the terminal-fitted electric wire 1 includes the electric wire 10, and the terminal 20 bonded to a terminal end of the electric wire 10.

The electric wire 10 is routed in a vehicle, and electrically connects devices. As illustrated in FIG. 1, the electric wire 10 includes a conductor part 11 (core wire) having conductivity, and an insulating cover part 12 having insulating properties. The electric wire 10 is an insulated electric wire obtained by covering the conductor part 11 with the insulating cover part 12. The conductor part 11 described in this example is a bundle of a plurality of strands 11a having conductivity. Moreover, for example, the insulating cover part 12 is formed by extrusion-molding a resin material having insulating properties (such as PP, PVC, and cross-linked PE. The material is appropriately selected by taking the abrasion resistance, chemical resistance, heat resistance, and the like into consideration) and the like. The conductor part 11 may also be obtained by twisting the strands 11a together.

Furthermore, the electric wire 10 extends linearly along the axial direction X. A cross-sectional shape of the conductor part 11 (cross-sectional shape in a direction intersecting the axial direction X that is an extending direction of the electric wire 10) is formed in a substantially circular shape, and a cross-sectional shape of the insulating cover part 12 is formed in a substantially annular shape. Hence, as a whole, a cross-sectional shape of the electric wire 10 is formed in a substantially circular shape. Still furthermore, as illustrated in FIG. 1, in the electric wire 10, the insulating cover part 12 is peeled off from at least one of the terminal ends. The terminal 20 is provided on a conductor exposed part 13 where the conductor part 11 is exposed from the terminal end of the insulating cover part 12.

The electric wire 10 is electrically connected to the terminal 20, and an object to be connected having conductivity is connected to the terminal 20. As illustrated in FIG. 1, the terminal 20 includes an electric connection part 21 and an electric wire connection part 22.

Moreover, in the terminal 20, parts are integrally formed in a three-dimensional shape, by performing various processes such as a punching process, a pressing process, and a bending process on a sheet of metal plate made of metal having conductivity according to the shape corresponding to each part. Therefore, in the terminal 20 of the present embodiment, the electric connection part 21 and the electric wire connection part 22 are integrally formed, and are connected to each other along the axial direction X.

The electric connection part 21 is a portion electrically connected to an object to be connected. As an example, the electric connection part 21 in the present embodiment is formed in a circular terminal (LA terminal) shape, and is provided with a through hole (not illustrated). For example, the terminal 20 formed in this manner is electrically connected to an object to be connected, by inserting a fastening member such as a bolt into the through hole of the electric connection part 21 and a through hole of an electric connection part of the object to be connected, and fixing the electric connection part of the object to be connected with the electric connection part 21. The shape of the electric connection part 21 is not particularly limited, and the connection form of the terminal 20 and the object to be connected is not particularly limited.

The electric wire connection part 22 is provided on one end side of the electric connection part 21, on a side opposite to the side electrically connected to the object to be connected. The electric wire connection part 22 is a portion where the electric wire 10 is connected. As illustrated in FIG. 1, as a whole, the electric wire connection part 22 in the present embodiment is formed in a plate shape.

Moreover, as illustrated in FIG. 1, the electric wire connection part 22 has a first straight region 23, a curved region 24, and a second straight region 25. Furthermore, in the electric wire connection part 22, the first straight region 23, the curved region 24, and the second straight region 25 are aligned and connected to each other in this order along the axial direction X from one side toward the other side.

The first straight region 23 is a portion extending from the electric connection part 21, and is a main portion of the electric wire connection part 22. As illustrated in FIG. 1, the first straight region 23 in the present embodiment is formed linearly along the axial direction X. Then, the first straight region 23 is electrically connected to the electric wire 10, when a tip end portion of the conductor exposed part 13 is ultrasonically bonded. A size of the first straight region 23 is not particularly limited. However, a length of the first straight region 23 in the axial direction X is preferably set longer than a length of the curved region 24 in the axial direction X, and a length of the second straight region 25 in the axial direction X.

The curved region 24 is a portion that extends from the first straight region 23 to the side opposite to the electric connection part 21, and that rises from the first straight region 23 to the conductor part 11 side. As illustrated in FIG. 1, the curved region 24 in the present embodiment is located at an end part of one end side (side toward which the electric wire 10 extends in the axial direction X) of the electric wire connection part 22. The curved region 24 is formed in a shape bent and curved toward a front surface side where the conductor part 11 is disposed along the up-and-down direction Z that is a thickness direction of the first straight region 23.

The second straight region 25 is a portion that extends from the curved region 24 to the side opposite to the first straight region 23, and that is located with a level different from the first straight region 23. As illustrated in FIG. 1, the second straight region 25 in the present embodiment is located at an end part of one end side (side toward which the electric wire 10 extends in the axial direction X) of the electric wire connection part 22, and is offset to the front surface side where the conductor part 11 is disposed closer than the first straight region 23, with respect to the up-and-down direction Z that is the thickness direction of the first straight region 23. Then, the curved region 24 and the second straight region 25 described above are electrically connected to the electric wire 10, when a root portion of the conductor exposed part 13 is ultrasonically bonded.

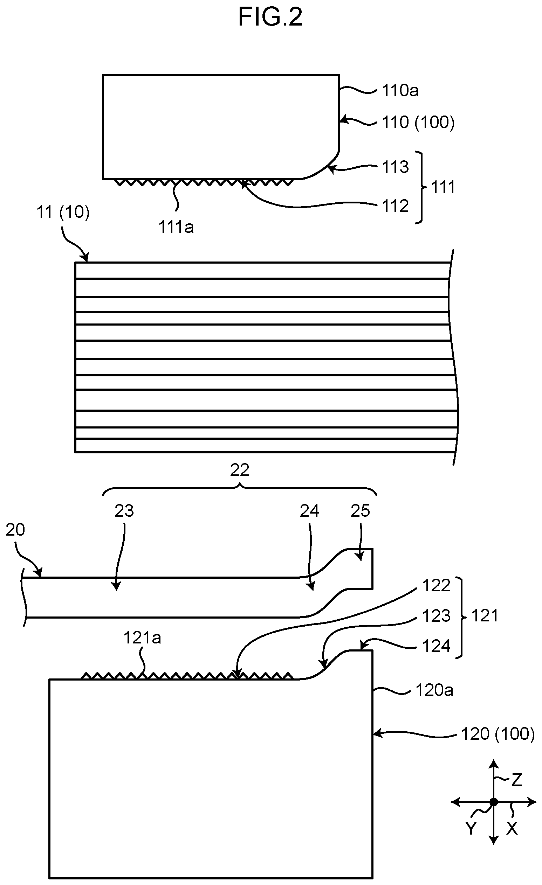

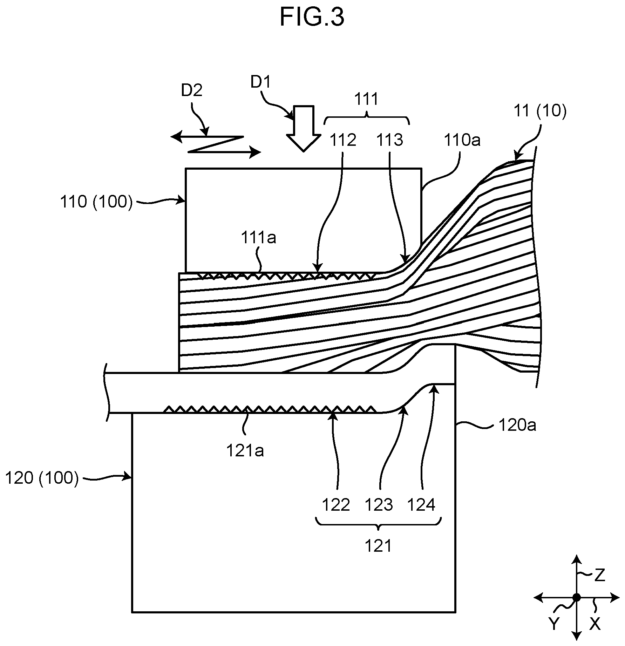

The terminal-fitted electric wire 1 configured as described above is manufactured by ultrasonically bonding the conductor part 11 of the electric wire 10 and the terminal 20 by the ultrasonic bonding device 100 illustrated in FIG. 2 and the like. Then, the ultrasonic bonding device 100 in the present embodiment can secure proper conduction performance at a bonding region between the electric wire 10 and the terminal 20, by proving an inclined part (an application surface end inclined part 113, which will be described later) at an end part (end part of a side toward which the electric wire 10 extends in the axial direction X) of a horn 110, and also providing an inclined part (mounting surface end inclined part 123, which will be described later) at an end part of an anvil 120 located facing the end part of the horn 110. Hereinafter, with reference to FIG. 2 and FIG. 3, a configuration of the ultrasonic bonding device 100 will be described in detail.

The ultrasonic bonding device 100 ultrasonically bonds a terminal end of the conductor part 11 to the terminal 20. As illustrated in FIG. 2 and FIG. 3, the ultrasonic bonding device 100 includes the horn 110 and the anvil 120. For the convenience of explanation, in FIG. 2 and FIG. 3, illustrations of supporting members that support the horn 110 and the anvil 120, a moving mechanism, and the like are omitted. Moreover, in the following description, an end means a tip end, and an end part means a certain range from the end.

The horn 110 transmits ultrasonic vibration to a member to be ultrasonically bonded. As illustrated in FIG. 2, the horn 110 in the present embodiment faces the anvil 120 along the up-and-down direction Z, and is disposed on an upper side of the anvil 120. Moreover, as illustrated in FIG. 3, the horn 110 can pressurize the terminal end of the conductor part 11 against the terminal 20, by moving to the lower side (anvil 120 side) and interposing the terminal 20 and the terminal end of the conductor part 11 between the anvil 120 and the horn 110. Furthermore, as illustrated in FIG. 3, by applying ultrasonic vibration while coming into contact with the conductor part 11 and pressurizing the conductor part 11, the horn 110 can transmit ultrasonic vibration to the bonding region between the electric wire 10 and the terminal 20. A pressurizing direction of the horn 110 is an arrow direction D1 illustrated in FIG. 3, and the arrow direction D1 is a direction from the upper side toward the lower side. Still furthermore, the vibration direction of the horn 110 is an arrow direction D2 illustrated in FIG. 3, and the arrow direction D2 is a direction along the axial direction X.

Still furthermore, as illustrated in FIG. 2 and FIG. 3, the horn 110 has an application surface 111 that applies ultrasonic vibration to the terminal 20 and the terminal end of the conductor part 11 disposed on the terminal 20. The application surface 111 comes into contact with the conductor part 11, while the terminal 20 and the terminal end of the conductor part 11 are interposed between the anvil 120 and the application surface 111.

Still furthermore, as illustrated in FIG. 2 and FIG. 3, the application surface 111 has an application surface main body part 112 and the application surface end inclined part 113. Still furthermore, in the application surface 111, the application surface main body part 112 and the application surface end inclined part 113 are continuously formed along the axial direction X from one side toward the other side. Then, the application surface 111 can ultrasonically bond the electric wire 10 and the terminal 20, when the application surface main body part 112 and the application surface end inclined part 113 each come into contact with the conductor part 11, and apply ultrasonic vibration while pressurizing the conductor part 11.

The application surface main body part 112 is the main portion of the application surface 111. As illustrated in FIG. 2 and FIG. 3, the application surface main body part 112 in the present embodiment is formed linearly along the axial direction X. Moreover, the application surface main body part 112 has a plurality of protrusions 111a. As illustrated in FIG. 2 and FIG. 3, the protrusions 111a are formed continuously along the axial direction X. Furthermore, the protrusions 111a are tapered toward the lower side, and have the same height in the up-and-down direction Z. Therefore, as illustrated in FIG. 3, the application surface main body part 112 applies ultrasonic vibration by vibrating itself while bringing the protrusions 111a into contact with a front surface of the conductor part 11.

The application surface end inclined part 113 is a portion that rises from the application surface main body part 112 to the upper side. As illustrated in FIG. 2 and FIG. 3, the application surface end inclined part 113 in the present embodiment is located at an end part of one end side (side toward which the electric wire 10 extends in the axial direction X) of the application surface main body part 112, and is formed in a concave curved surface that separates from a mounting surface 121 (the mounting surface 121 will be described later) of the anvil 120 along the up-and-down direction Z, toward an end of the application surface 111 in the axial direction X (that is, an end 110a of the horn 110 in the axial direction X). Moreover, the application surface end inclined part 113 does not have the protrusions 111a described above. Therefore, as illustrated in FIG. 3, the application surface end inclined part 113 applies ultrasonic vibration, by vibrating a flat surface (surface on which the protrusions 111a are not formed) while bringing the flat surface into contact with the front surface of the conductor part 11.

The anvil 120 is a platform that receives a member to be ultrasonically bonded. As illustrated in FIG. 2, the anvil 120 in the present embodiment faces the horn 110 along the up-and-down direction Z, and is disposed on the lower side of the horn 110. Moreover, as illustrated in FIG. 3, when the terminal 20 and the terminal end of the conductor part 11 are interposed between the horn 110 and the anvil 120, the anvil 120 can pressurize the terminal 20 by pressing the terminal end of the conductor part 11 against the terminal 20, by receiving a load transmitted to the terminal 20 from the horn 110.

Moreover, as illustrated in FIG. 2 and FIG. 3, the anvil 120 has the mounting surface 121 on which the terminal 20 and the terminal end of the conductor part 11 are mounted. The mounting surface 121 comes into contact with the terminal 20, while the terminal 20 and the terminal end of the conductor part 11 are interposed between the horn 110 and the mounting surface 121.

Moreover, as illustrated in FIG. 2 and FIG. 3, the mounting surface 121 has a mounting surface main body part 122, the mounting surface end inclined part 123, and a mounting surface end flat part 124. Furthermore, on the mounting surface 121, the mounting surface main body part 122, the mounting surface end inclined part 123, and the mounting surface end flat part 124 are formed continuously along the axial direction X from one side toward the other side. Then, on the mounting surface 121, the first straight region 23, the curved region 24, and the second straight region 25 described above are disposed while in contact with the mounting surface main body part 122, the mounting surface end inclined part 123, and the mounting surface end flat part 124, respectively.

The mounting surface main body part 122 is the main portion of the mounting surface 121. As illustrated in FIG. 2 and FIG. 3, the mounting surface main body part 122 in the present embodiment is formed linearly along the axial direction X. Moreover, the mounting surface main body part 122 has a plurality of protrusions 121a. As illustrated in FIG. 2 and FIG. 3, the protrusions 121a are formed continuously along the axial direction X. Furthermore, the protrusions 121a are tapered toward the upper side, and have the same height in the up-and-down direction Z. Therefore, as illustrated in FIG. 3, on the mounting surface main body part 122, the first straight region 23 can be mounted by bringing the protrusions 121a into contact with a front surface of the first straight region 23 of the terminal 20.

The mounting surface end inclined part 123 is a portion that rises from the mounting surface main body part 122 to the upper side. As illustrated in FIG. 2 and FIG. 3, the mounting surface main body part 122 in the present embodiment is located at an end part of one end side (side toward which the electric wire 10 extends in the axial direction X) of the mounting surface main body part 122, and is formed in a concave curved surface that approaches the application surface 111 side of the horn 110 along the up-and-down direction Z, toward an end of the mounting surface 121 in the axial direction X (that is, an end 120a of the anvil 120 in the axial direction X). Moreover, the mounting surface end inclined part 123 does not have the protrusions 121a described above. Therefore, as illustrated in FIG. 3, on the mounting surface end inclined part 123, the curved region 24 can be mounted by bringing a flat surface (surface on which the protrusions 121a are not formed) into contact with a front surface of the curved region 24 of the terminal 20.

Furthermore, the curvature of the curved surface of the mounting surface end inclined part 123 is equivalent to the curvature of the curved surface of the application surface end inclined part 113. Still furthermore, the curvature of the curved surface of the mounting surface end inclined part 123 is equivalent to the curvature of the curved region 24 of the terminal 20. Therefore, as illustrated in FIG. 2 and FIG. 3, the mounting surface end inclined part 123 in the present embodiment is determined according to a shape of the application surface end inclined part 113. Still furthermore, because a shape of the curved region 24 of the terminal 20 is determined according to a shape of the mounting surface end inclined part 123, it is possible to dispose the terminal 20 on an appropriate position of the mounting surface 121. Still furthermore, because the shape of the application surface end inclined part 113, the shape of the mounting surface end inclined part 123, and the shape of the curved region 24 of the terminal 20 are formed in the same curved shape, a distance between the horn 110 and the anvil 120 can be kept constant during ultrasonic bonding.

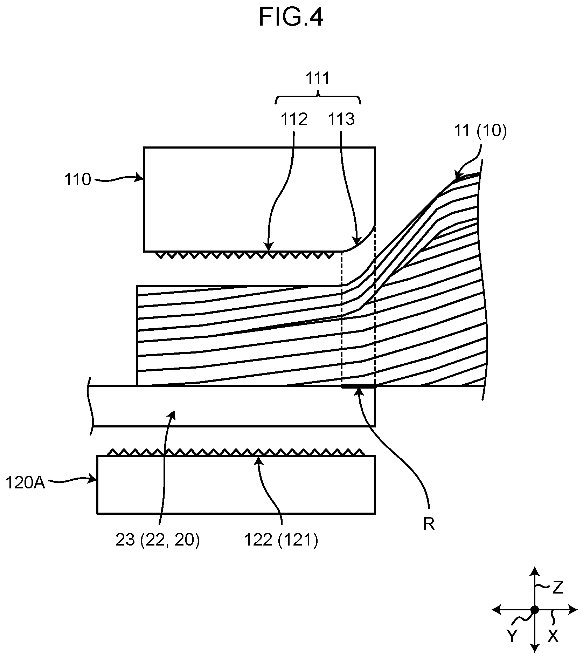

For example, as illustrated in FIG. 4, if the application surface end inclined part 113 is provided on the horn 110 side, and the mounting surface 121 is configured only by the mounting surface main body part 122 without providing the mounting surface end inclined part 123 on an anvil 120A side, a distance between the application surface end inclined part 113 and the mounting surface main body part 122 becomes longer than a distance between the application surface main body part 112 and the mounting surface main body part 122. Therefore, when the electric wire 10 and the terminal 20 are ultrasonically bonded by the horn 110 and the anvil 120A illustrated in FIG. 4, a load received from the horn 110 is attenuated more in a region R than that in the other region, the region R being interposed between the application surface end inclined part 113 and the mounting surface main body part 122, and where the conductor part 11 is pressed against the terminal 20. As a result, bonding strength at the region R or the like may be reduced than that of the other region.

In contrast, when the terminal 20 and the conductor part 11 are ultrasonically bonded by the horn 110 and the anvil 120 in the present embodiment illustrated in FIG. 2 and FIG. 3, the distance between the anvil 120 and the horn 110 can be kept constant. Hence, it is possible to prevent the load applied to the region R from the horn 110 from being attenuated more than the other region. Therefore, the ultrasonic bonding device 100 in the present embodiment can improve bonding strength between the electric wire 10 and the terminal 20.

The ultrasonic bonding device 100 described above includes the anvil 120 that has the mounting surface 121 on which the terminal 20 having conductivity and the terminal end of the conductor part 11 of the electric wire 10 having conductivity are mounted, and the horn 110 disposed facing the anvil 120 along the up-and-down direction Z, and that has the application surface 111 for applying ultrasonic vibration to the terminal 20 disposed on the mounting surface 121 and the conductor part 11 disposed on the terminal 20. Moreover, the application surface 111 has the application surface main body part 112 that extends along the axial direction X intersecting the up-and-down direction Z, and the application surface end inclined part 113 located at the end part of the side toward which the electric wire 10 extends in the axial direction X, and that is formed in the concave curved surface that separates from the mounting surface 121 along the up-and-down direction Z toward the end 110a in the axial direction X. The mounting surface 121 has the mounting surface main body part 122 that extends along the axial direction X and that faces the application surface main body part 112 along the up-and-down direction Z, and the mounting surface end inclined part 123 located at the end part of the side toward which the electric wire 10 extends in the axial direction X and that faces the application surface end inclined part 113 along the up-and-down direction Z, and that is formed in a convex curved surface that approaches the application surface 111 side along the up-and-down direction Z toward the end 120a in the axial direction X. Furthermore, the terminal-fitted electric wire 1 in which the electric wire 10 and the terminal 20 are bonded by the ultrasonic bonding device 100 described above includes the electric wire 10 having the conductor part 11 formed of a plurality of strands having conductivity, and the terminal 20 including the electric connection part 21 electrically connected to an object to be connected, and the electric wire connection part 22 to which the conductor part 11 is ultrasonically bonded. Still furthermore, the electric wire connection part 22 has the first straight region 23 that extends from the electric connection part 21, and the curved region 24 that extends from the first straight region 23 to the side opposite to the electric connection part 21, and that rises from the first straight region 23 to the conductor part 11 side.

According to such a configuration, by providing the inclined part (application surface end inclined part 113) at the end part of the horn 110, the ultrasonic bonding device 100 can prevent the conductor part 11 from being damaged, when the end part of the horn 110 vibrates while in contact with the front surface of the conductor part 11 during ultrasonic bonding. Moreover, by also providing the inclined part (mounting surface end inclined part 123) at the end part of the anvil 120 located facing the end part of the horn 110, the ultrasonic bonding device 100 can prevent the load received by the terminal 20 and the conductor part 11 interposed between the application surface end inclined part 113 and the mounting surface main body part 122 from being attenuated during ultrasonic bonding. Therefore, the ultrasonic bonding device 100 can prevent a fixing force of the conductor part 11 of the electric wire 10 to the terminal 20 from being reduced. Hence, the ultrasonic bonding device 100 can ultrasonically bond the electric wire 10 and the terminal 20 in an appropriate manner. Consequently, the ultrasonic bonding device 100 and the terminal-fitted electric wire 1 in the present embodiment can secure proper conduction performance at the bonding region between the electric wire 10 and the terminal 20.

In addition, by preventing the load applied to the terminal 20 and the conductor part 11 interposed between the application surface end inclined part 113 and the mounting surface main body part 122 from being attenuated, the ultrasonic bonding device 100 can reduce the time required for ultrasonic bonding. Moreover, the terminal-fitted electric wire 1 in which the electric wire 10 and the terminal 20 are bonded by the ultrasonic bonding device 100 can be manufactured at a lower cost than that of a conventional terminal-fitted electric wire, because the electric wire 10 and the terminal 20 are bonded by an easy process.

What is more, the mounting surface 121 of the anvil 120 described above further has the mounting surface end flat part 124 that extends from the mounting surface end inclined part 123 to the end 120a of the side toward which the electric wire 10 extends in the axial direction X, and that is located on the application surface 111 side closer than the mounting surface main body part 122 in the up-and-down direction Z. Furthermore, the electric wire connection part 22 of the terminal 20 that configures the terminal-fitted electric wire 1 described above further has the second straight region 25 that extends from the curved region 24 toward the side opposite to the first straight region 23, and that is located with a different level from the first straight region 23. According to such a configuration, the ultrasonic bonding device 100 can suppress the terminal 20 disposed on the mounting surface 121 from moving in the vibration direction (direction along the axial direction X) by the vibration of the horn 110 during ultrasonic bonding in an appropriate manner. Therefore, the ultrasonic bonding device 100 can ultrasonically bond the electric wire 10 and the terminal 20 in a more appropriate manner. Consequently, the ultrasonic bonding device 100 and the terminal-fitted electric wire 1 in the present embodiment can secure proper conduction performance at the bonding region between the electric wire 10 and the terminal 20.

What is more, the curvature of the curved surface of the mounting surface end inclined part 123 described above is equivalent to the curvature of the curved surface of the application surface end inclined part 113. According to such a configuration, because the shape of the mounting surface end inclined part 123 of the anvil 120 corresponds to the shape of the application surface end inclined part 113 of the horn 110, the ultrasonic bonding device 100 can keep the distance between the anvil 120 and the horn 110 constant during ultrasonic bonding. Therefore, the ultrasonic bonding device 100 can more reliably prevent the load transmitted from the horn 110 during ultrasonic bonding from being attenuated. Moreover, because the load on the anvil 120 received from the horn 110 is constant, the ultrasonic bonding device 100 can keep the bonding strength between the electric wire 10 and the terminal 20 constant (can uniformly fix the conductor part 11 of the electric wire 10 to the terminal 20). Hence, the ultrasonic bonding device 100 can ultrasonically bond the electric wire 10 and the terminal 20 in a more appropriate manner. Consequently, the ultrasonic bonding device 100 and the terminal-fitted electric wire 1 in the present embodiment can secure proper conduction performance at the bonding region between the electric wire 10 and the terminal 20.

The ultrasonic bonding device 100 and the terminal-fitted electric wire 1 according to the embodiment of the present invention described above are not limited to the embodiment described above, and various modifications can be made within the scope of the claims.

For example, the mounting surface 121 may not have the mounting surface end flat part 124.

Moreover, the curvature of the curved surface of the application surface end inclined part 113 of the application surface 111 may be different from the curvature of the curved surface of the mounting surface end inclined part 123 of the mounting surface 121.

Furthermore, in the terminal 20, the first straight region 23, the curved region 24, and the second straight region 25 may be formed by performing the pressing process in advance. The first straight region 23, the curved region 24, and the second straight region 25 may be formed by the pressing process at the same time when ultrasonic bonding is performed by the ultrasonic bonding device 100.

Still furthermore, shapes of parts other than the first straight region 23, the curved region 24, and the second straight region 25 of the terminal 20 are not particularly limited.

Still furthermore, the terminal 20 may not have the second straight region 25.

Still furthermore, whether surface treatment is performed on the terminal 20 is not particularly limited.

Still furthermore, the ultrasonic bonding device 100 and the terminal-fitted electric wire 1 according to the present embodiment may be configured by combining the components of the embodiment described above as appropriate.

The ultrasonic bonding device and the terminal-fitted electric wire according to the present embodiment can secure proper conduction performance at the bonding region between the electric wire and the terminal.

## Claims

1. An ultrasonic bonding device (100), comprising:
an anvil (120) that has a mounting surface (121) on which a terminal (20) having conductivity and a terminal end of a conductor part (11) of an electric wire (10) having conductivity are mounted; and
a horn (110) disposed facing the anvil (120) along an up-and-down direction (Z), and that has an application surface (111) for applying ultrasonic vibration to the terminal (20) disposed on the mounting surface (121) and the conductor part (11) disposed on the terminal (20), wherein
the application surface (111) has an application surface main body part (112) that extends along an axial direction (X) intersecting the up-and-down direction (Z), and an application surface end inclined part (113) located at an end part of a side toward which the electric wire (10) extends in the axial direction (X), and that is formed in a concave curved surface that separates from the mounting surface (121) along the up-and-down direction (Z) toward an end (110a) in the axial direction (X), and
the mounting surface (121) has a mounting surface main body part (122) that extends along the axial direction (X) and that faces the application surface main body part (112) along the up-and-down direction (Z), and a mounting surface end inclined part (123) located at an end part of a side toward which the electric wire (10) extends in the axial direction (X) and that faces the application surface end inclined part (113) along the up-and-down direction (Z), and that is formed in a convex curved surface that approaches the application surface (111) side along the up-and-down direction (Z) toward an end (120a) in the axial direction (X).

2. The ultrasonic bonding device (100) according to claim 1, wherein the mounting surface (121) further includes a mounting surface end flat part (124) that extends from the mounting surface end inclined part (123) to an end (120a) of a side toward which the electric wire (10) extends along the axial direction (X), and that is located on the application surface (111) side closer than the mounting surface main body part (122) in the up-and-down direction (Z).

3. The ultrasonic bonding device (100) according to claim 1 or 2, wherein a curvature of the curved surface of the mounting surface end inclined part (123) is equivalent to a curvature of the curved surface of the application surface end inclined part (113).

4. A terminal-fitted electric wire (1), comprising:
an electric wire (10) that includes a conductor part (11) formed of a plurality of strands having conductivity; and
a terminal (20) that includes an electric connection part (21) electrically connected to an object to be connected, and an electric wire connection part (22) to which the conductor part (11) is ultrasonically bonded, wherein
the electric wire connection part (22) has a first straight region (23) that extends from the electric connection part (21), and a curved region (24) that extends from the first straight region (23) to a side opposite to the electric connection part (21), and that rises from the first straight region (23) to the conductor part (11) side.

5. The terminal-fitted electric wire (1) according to claim 4, wherein the electric wire connection part (22) further has a second straight region (25) that extends from the curved region (24) to a side opposite to the first straight region (23) and that is located with a different level from the first straight region (23).
